# EUROPEAN PATENT APPLICATION

(11) **EP 3 882 200 A1**
(43) Date of publication of application: **22.09.2021**
(21) Application number: 20216367.1
(22) Date of filing: 22.12.2020
(51) Int. Cl.: B66B 3/00, B66B 1/46

(54) **ROBOT CONCIERGE**

(30) Priority: 16.03.2020 US 202016819226
(71) Applicant: Otis Elevator Company, Farmington, Connecticut 06032 (US)
(72) Inventor: SAKAI, Osamu, Shibayama-machi, chiba 289-1693 (JP); YAMADA, Atsushi, Shibayama-machi, chiba 289-1693 (JP); HONMA, Hideyuki, Shibayama-machi, chiba 289-1693 (JP); NICHOLS, Stephen Richard, Farmington, CT Connecticut 06032 (US); KEENAN, JR., Michael P., Bloomfield, CT Connecticut 06002 (US)
(74) Representative: Dehns

(57) **Abstract**

A method (400) of assisting an individual (190) using a robot concierge system (200) including: determining that the individual (190) is in need of assistance using a sensor system (270) of a robot (202) assigned to a conveyance system; and assisting the individual (190) through the robot (202).

## Description

### BACKGROUND

The subject matter disclosed herein relates generally to the field of conveyance systems, and specifically to a method and apparatus for assisting individuals located proximate conveyance systems.

Conveyance systems such as, for example, elevator systems, escalator systems, and moving walkways and other building locations may be sometimes difficult to locate within a building for certain individuals depending on where the individual is located in the building.

### BRIEF SUMMARY

According to an embodiment, a method of assisting an individual using a robot concierge system is provided. The method including: determining that the individual is in need of assistance using a sensor system of a robot assigned to the conveyance system; and assisting the individual through the robot.

In addition to one or more of the features described herein, or as an alternative, further embodiments may include: determining that the individual is in need of information using the sensor system; and providing the information to the individual through the robot.

In addition to one or more of the features described herein, or as an alternative, further embodiments may include: transmitting the information from a building system manager; and receiving the information at the robot.

In addition to one or more of the features described herein, or as an alternative, further embodiments may include: requesting, using the robot, the information from a building system manager; transmitting the information from the building system manager; and receiving the information at the robot.

In addition to one or more of the features described herein, or as an alternative, further embodiments may include that the information pertains to at least one of directions, a directory, and a schedule.

In addition to one or more of the features described herein, or as an alternative, further embodiments may include: receiving a question from the individual requesting information; and providing the information to the individual through the robot.

In addition to one or more of the features described herein, or as an alternative, further embodiments may include: receiving a question from the individual requesting information using a microphone of the sensor system or a camera of the sensor system; and providing the information to the individual through the robot.

In addition to one or more of the features described herein, or as an alternative, further embodiments may include that the question is conveyed by the individual using sign language that is captured by the camera.

In addition to one or more of the features described herein, or as an alternative, further embodiments may include: receiving a question from the individual requesting information; and providing the information to the individual by at least one of: audibly using a speaker of the robot, visually using a display device of the robot, and visually using an arm of the robot.

In addition to one or more of the features described herein, or as an alternative, further embodiments may include: determining that the individual is in need of directions; and providing directions to the individual.

In addition to one or more of the features described herein, or as an alternative, further embodiments may include: determining that the individual is in need of directions; and providing directions to the individual by at least one of: audibly using a speaker of the robot, visually using a display device of the robot, and visually using an arm of the robot.

In addition to one or more of the features described herein, or as an alternative, further embodiments may include: determining that the individual is in need of directions to a destination; and instructing the robot to lead the individual to the destination.

In addition to one or more of the features described herein, or as an alternative, further embodiments may include: determining that the individual would like to use the conveyance system; and controlling, using the robot, operation of the conveyance system for the individual.

In addition to one or more of the features described herein, or as an alternative, further embodiments may include: determining that the individual would like to use the conveyance system, the conveyance system being an elevator system including an elevator car; and calling, using the robot, the elevator car for the individual.

In addition to one or more of the features described herein, or as an alternative, further embodiments may include: determining that the individual would like to use the conveyance system, the conveyance system being an elevator system including an elevator car; and holding, using the robot, a door of the elevator system open for the individual to enter the elevator car by using an arm of the robot or by communicating with at least one of a dispatcher of the elevator system and a controller of the elevator system.

In addition to one or more of the features described herein, or as an alternative, further embodiments may include: determining that the individual would like to use the conveyance system, the conveyance system being an elevator system including an elevator car; and holding, using the robot, a door of the elevator system open for the individual to enter the elevator car by extending an arm of the robot to hold a door of the elevator system open for the individual to enter the elevator car, wherein the arm interacts with a door reversal sensor of the elevator system or and the arm presses a door open button of the elevator system.

In addition to one or more of the features described herein, or as an alternative, further embodiments may include: asking if the individual is in need of information using a microphone of the sensor system, a display device of the sensor system, or sign language.

In addition to one or more of the features described herein, or as an alternative, further embodiments may include: asking if the individual would like to use the conveyance system using a microphone of the sensor system, a display device of the sensor system, or sign language.

In addition to one or more of the features described herein, or as an alternative, further embodiments may include: detecting the individual using a sensor system of a robot assigned to a conveyance system.

According to another embodiment, a computer program product embodied on a non-transitory computer readable medium is provided. The computer program product including instructions that, when executed by a processor, cause the processor to perform operations including: determining that the individual is in need of assistance using a sensor system of a robot assigned to a conveyance system; and assisting the individual through the robot.

Technical effects of embodiments of the present disclosure include using a robot concierge system to aid an individual that is in need of assistance.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 illustrates a schematic view of a robot concierge system used to assist individuals, in accordance with an embodiment of the disclosure; and
FIG. 3 is a flow chart of method assisting an individual using a robot concierge system of FIG. 2, in accordance with an embodiment of the disclosure.

### DETAILED DESCRIPTION

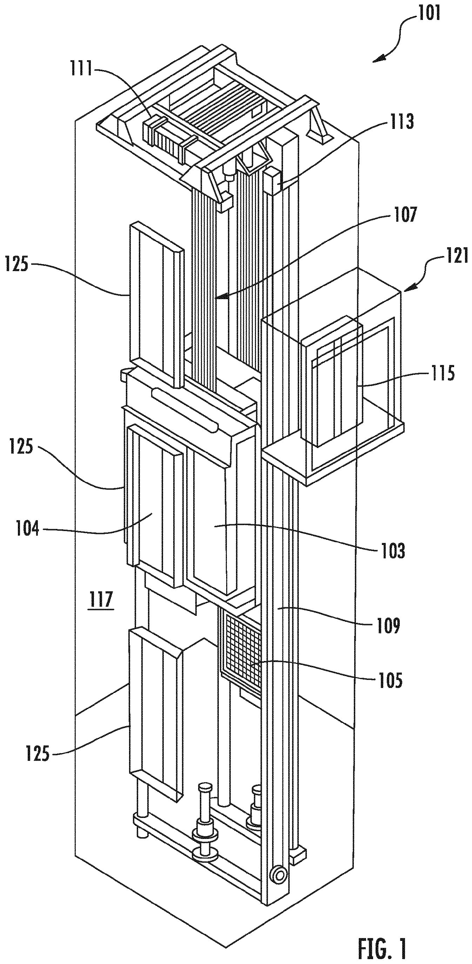

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system.

The elevator system 101 also includes one or more elevator doors 104. The elevator door 104 may be integrally attached to the elevator car 103 and/or the elevator door 104 may be located on a landing 125 of the elevator system 101. Embodiments disclosed herein may be applicable to both an elevator door 104 integrally attached to the elevator car 103 and/or an elevator door 104 located on a landing 125 of the elevator system 101. The elevator door 104 opens to allow passengers to enter and exit the elevator car 103.

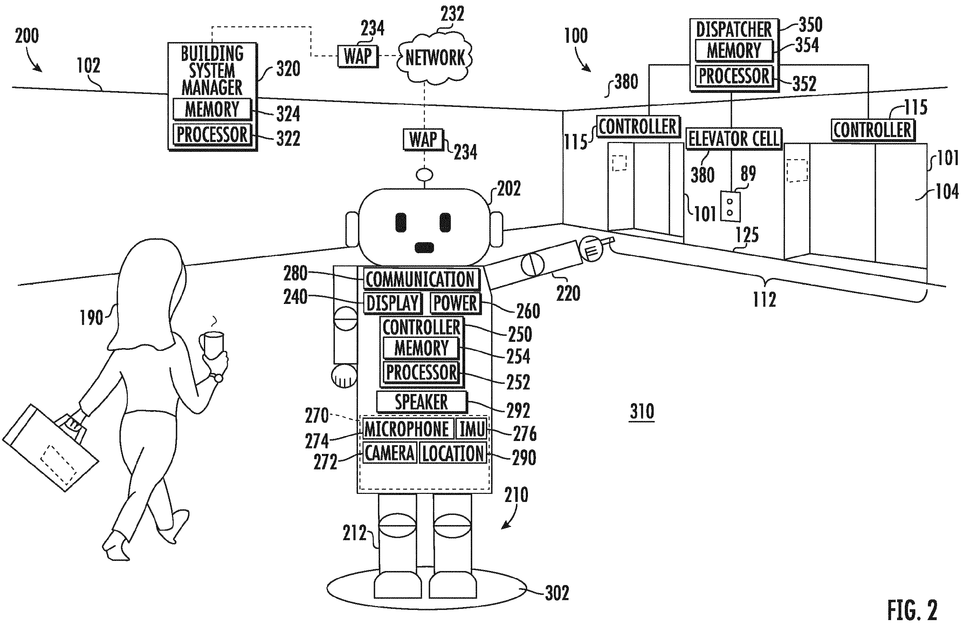

Referring now to FIG. 2, with continued reference to FIG. 1, a robot concierge system 200 is illustrated, in accordance with an embodiment of the present disclosure. It should be appreciated that, although particular systems are separately defined in the schematic block diagrams, each or any of the systems may be otherwise combined or separated via hardware and/or software. The robot concierge system 200 comprises and/or is in wireless communication with a robot 202. It is understood that one robot 202 is illustrated, the embodiments disclosed herein may be applicable to a robot concierge system 200 having one or more robots 202. The robot 202 is configured to provide assistance to individuals 190. The individual 190 may be looking for an elevator system 100 or directions to anywhere else. In one example, the robot 202 may be configured to recognize individuals 190 and direct the individual 190 to an elevator system 101. In another example, the robot 202 may be configured to receive a question from the individual 190 and respond to that question. The question may be "Where may I find the elevators?" and the robot 202 may direct the individual to the elevator system 101 by responding with a verbal answer, pointing with an arm 220 of the robot 202, and/or moving towards the elevator system 101 so that the individual 190 may follow.

It is understood that while elevator systems 101 are utilized for exemplary illustration, embodiments disclosed herein may be applied to other conveyance systems utilizing conveyance apparatuses for transportation such as, for example, escalators, moving walkways, etc.

As illustrated in FIG. 2, a building elevator system 100 within a building 102 may include multiple different individual elevator systems 101 organized in an elevator bank 112. The elevator systems 101 include an elevator car 103 (not shown in FIG. 2 for simplicity). It is understood that while two elevator systems 101 are utilized for exemplary illustration, embodiments disclosed herein may be applied to building elevator systems 100 having one or more elevator systems 101. Further, the elevator systems 101 illustrated in FIG. 2 are organized into an elevator bank 112 for ease of explanation but it is understood that the elevator systems 101 may be organized into one or more elevator banks 112. Each of the elevator banks 112 may contain one or more elevator systems 101. Each of the elevator banks 112 may also be located on different landings 125.

The landing 125 in the building 102 of FIG. 2 may have an elevator call device 89 located proximate the elevator systems 101. The elevator call device 89 transmits an elevator call 380 to a dispatcher 350 of the building elevator system 100. It should be appreciated that, although the dispatcher is separately defined in the schematic block diagrams, the dispatcher 350 may be combined via hardware and/or software in any controller 115 or other device. The elevator call 380 may include the source of the elevator call 380. The elevator call device 89 may include a destination entry option that includes the destination of the elevator call 380. The elevator call device 89 may be a push button and/or a touch screen and may be activated manually or automatically. For example, the elevator call 380 may be sent by an individual 190 or a robot 202 entering the elevator call 380 via the elevator call device 89. The elevator call device 89 may also be a mobile device configured to transmit an elevator call 380 and a robot 202 may be in possession of said mobile device to transmit the elevator call 380. The mobile device may be a smart phone, smart watch, laptop, or any other mobile device known to one of skill in the art.

The controllers 115 can be combined, local, remote, cloud, etc. The dispatcher 350 may be local, remote, cloud, etc. The dispatcher 350 is in communication with the controller 115 of each elevator system 101. Alternatively, there may be a single controller that is common to all of the elevator systems 101 and controls all of the elevator system 101, rather than two separate controllers 115, as illustrated in FIG. 2. The dispatcher 350 may be a 'group' software that is configured to select the best elevator car 103 to be assigned to the elevator call 380. The dispatcher 350 manages the elevator call devices 89 related to the elevator bank 112.

The dispatcher 350 is configured to control and coordinate operation of multiple elevator systems 101. The dispatcher 350 may be an electronic controller including a processor 352 and an associated memory 354 comprising computer-executable instructions that, when executed by the processor 352, cause the processor 352 to perform various operations. The processor 352 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 354 may be but is not limited to a random access memory (RAM), read only memory (ROM), or other electronic, optical, magnetic or any other computer readable medium.

The dispatcher 350 is in communication with the elevator call devices 89 of the building elevator system 100. The dispatcher 350 is configured to receive the elevator call 380 transmitted from the elevator call device 89. The dispatcher 350 is configured to manage the elevators calls 380 coming in from the elevator call device 89 and command one or more elevator systems 101 to respond to elevator call 380.

The robot 202 may be configured to operate fully autonomously using a controller 250 to control operation of the robot 202. The controller 250 may be an electronic controller that includes a processor 252 and an associated memory 254 including computer-executable instructions that, when executed by the processor 252, cause the processor 252 to perform various operations. The processor 252 may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 254 may be a storage device such as, for example, a random access memory (RAM), read only memory (ROM), or other electronic, optical, magnetic or any other computer readable medium.

The robot 202 includes a power source 260 configured to power the robot 202. The power source 260 may include an energy harvesting device and/or an energy storage device. In an embodiment, the energy storage device may be an onboard battery system. The battery system may include but is not limited to a lithium ion battery system. The robot 202 may be configured to move to an external power source (e.g., electrical outlet) to recharge the power source 260.

The robot 202 includes a speaker 292 configured to communicate audible words, music, and/or sounds to individuals 190 located proximate the robot 202. The robot 202 also includes a display device 240 configured to display information visually to individuals 190 located proximate the robot 202. For example, the display device 240 may be a flat screen monitor, a computer tablet, or smart phone device. In an embodiment, the display device 240 may be located on the head of the robot 202 or may replace the head of the robot 202. In an embodiment, the display device 240 a computer tablet or similar display device that is carried by the robot 202.

The robot 202 may be stationed (i.e., located) permanently or temporarily within an elevator lobby 310 that is located on the landing 125 proximate the elevator system 101. The robot 202 may include a propulsion system 210 to move the robot 202. The robot 202 may move throughout the elevator lobby 310, move away from the elevator lobby 310 throughout the landing 125, and/or may move to other landings via the elevator system 101 and/or a stair case (not shown). The propulsion system 210 may be a leg system, as illustrated in FIG. 2, that simulates human legs. As illustrated in FIG. 2, the propulsion system 210 may include two or more legs 212, which are used to move the robot 202. It is understood that while the leg system is utilized for exemplary illustration, embodiments disclosed herein may be applied to robots having other propulsion systems for transportation such as, for example, a wheel system, a rotorcraft system, a hovercraft system, a tread system, or any propulsion system may be known of skill in the art may be utilized. It is also understood that a robot 202 having a humanoid appearance is utilized for exemplary illustration, embodiments disclosed herein may be applied to robots that do not have a humanoid appearance.

The robot 202 includes a sensor system 270 to collect sensor data. The sensor system 270 may include, but is not limited, to an inertial measurement unit (IMU) sensor 276, a camera 272, a microphone 274, and a location sensor system 290. The IMU sensor 276 is configured to detect accelerations of the robot 202. The IMU sensor 276 may be a sensor such as, for example, an accelerometer, a gyroscope, or a similar sensor known to one of skill in the art. The IMU sensor 276 may detect accelerations as well as derivatives or integrals of accelerations, such as, for example, velocity, jerk, jounce, snap... etc.

The camera 272 may be configured to capture images of areas surrounding the robot 202. The camera 272 may be a still image camera, a video camera, depth sensor, thermal camera, and/or any other type of imaging device known to one of skill in the art. In one embodiment, the controller 250 may be configured to analyze the images captured by the camera 272 using image recognition to identify an individual 190. In another embodiment, the controller 250 may be configured to transmit the images as raw data for processing by the building system manager 320. The image recognition may not only identify the individual 190 but also identifies whether the individual 190 appears to be lost and/or in need of information. Facial recognition and analysis of facial expressions may be utilized to determine whether the individual 190 appears to be lost and/or in need of information. Alternatively, the robot 202 may utilize the speaker 292 to ask the individual 190 "are you lost ?", "are you in need of directions?", "where are you heading", or "are you in need of assistance?. When it is determined that the individual 190 appears to be lost and/or in need of directions then the controller 250 is configured to provide information to the individual in the form of audible communication from the speaker 292 of the robot 202 or in the form of visual communication via the display device 240 of the robot 202. For example, the information may be directions to the elevator system 101 displayed as written turn-by-turn direction on the display device 240 or displayed as a map on the display device 240. The camera 272 may also be utilized to capture images of sign language being performed by the individual 190 which is analyzed to understand what assistance the individual 190 may require.

The microphone 274 is configured to detect sound. The microphone 274 is configured to detect audible sound proximate the robot 202, such as, for example, language spoken an individual 190 proximate the robot 202. In one embodiment, the controller 250 may be configured to analyze the sound captured by the microphone 274 using language recognition software and respond accordingly. In another embodiment, the controller 250 may be configured to transmit the sound as raw data for processing by the building system manager 320. For example, the microphone 274 may detect an individual 190 asking a question, such as, for example, "where are the elevators". The controller 250 and/or the building system manager 320 is configured to analyze this question and determine an appropriate response, such as, for example, providing directions to the nearest elevator system 101. The directions may be given audibly using the speaker 292 or displayed visually on the display device 240 in the form of a map or written turn-by-turn directions. The robot 202 may also guide the individual 190 to their destination by having the individual 190 follow the robot 202. In another example, the question or information requested by the individual 190 may also be in the form of a question regarding local events occurring within the building or in the local area. For example, an individual 190 may ask the robot 202, "What time does the convention start tomorrow" and the robot 202 may reply (audibly or visually) with the start time of the convention scheduled for tomorrow. In another example, an individual 190 may ask the robot 202, "What time is concert happening downtown tomorrow" and the robot 202 may reply (audibly or visually) with the start time of concert happening tomorrow. In another example, an individual 190 may ask the robot 202, "Where can I find a Doctor" and the robot 202 may reply (audibly or visually) with the location the doctor.

In yet another example, the individual 190 may ask the robot 202 to call an elevator car 103 for the individual 190. The individual 190 may include a specific landing as a desired destination to be included in the elevator call, such as, for example, "I want to go to the seventh floor". The robot 202 may physically move over to the elevator call device 89 and press the correct button on the elevator call device 89 to send the passenger to their desired destination. In an embodiment, the robot 202 may extend an arm 220 between the open elevator doors 104 to hold the elevator car 103 at the landing 125 for the individual 190 to board the elevator car 103. The extended arm 220 of the robot 202 interacts with a door reversal sensor (not shown for simplicity) of the elevator system 101 to prevent the elevator doors 104 from closing. Alternatively, the robot 202 may also hold the elevator doors 104 open for the individual 190 by pressing a "door open" button within the elevator car 103.

The robot 202 also includes a location sensor system 290 configured to detect a location 302 of the robot 202. The location 302 of the robot 202 may also include the location 302 of the robot 202 relative to other objects in order allow the robot 202 to navigate through hallways of a building and prevent the robot 202 from bumping into objects or individuals 190. The location sensing system 290 may use one or a combination or sensing devices including but not limited to GPS, wireless signal triangulation, SONAR, RADAR, LIDAR, image recognition, or any other location detection or collision avoidance system known to one of skill in the art. The location sensor system 290 may utilize GPS in order to detect a location 302 of the robot 202. The location sensor system 290 may utilize triangulation of wireless signals within the building 102 in order to determine a location of the robot 202 within a building 102. For example, the location sensor system 290 may triangulate the position of the robot 202 within a building 102 utilizing received signal strength (e.g., RSSI) of wireless signals from WAPs 234 in known locations throughout the building 102. In order to avoid colliding with objects, the location sensor system 290 may additionally use SONAR, RADAR, LIDAR, or image recognition (Convolutional Neural Networks). Upon initial deployment or a location reset, the robot 202 may perform a learn mode, such that the robot 202 may become familiar with the environment.

The robot 202 includes a communication module 280 configured to allow the controller 250 of the robot 202 to communicate with the building system manager 320. The communication module 280 is capable of transmitting and receiving data to and from the building system manager 320 through a computer network 232. The computer network 232 may be a cloud computing network.

The communication module 280 may communicate to the computer network 232 through a wireless access protocol device (WAP) 234 using short-range wireless protocols. Short-range wireless protocols may include, but are not limited to, Bluetooth, Wi-Fi, HaLow (801.11ah), zWave, ZigBee, or Wireless M-Bus. Alternatively, the communication module 280 may communicate directly with the computer network 232 using long-range wireless protocols. Long-range wireless protocols may include, but are not limited to, cellular, LTE (NB-IoT, CAT M1), LoRa, satellite, Ingenu, or SigFox.

The building system manager 320 may communicate to the computer network 232 through a WAP 234 using short-range wireless protocols. The building system manager 320 may communicate directly with the computer network 232 using long-range wireless protocols.

The building system manager 320 is an electronic controller that includes a processor 322 and an associated memory 324 including computer-executable instructions that, when executed by the processor 322, cause the processor 322 to perform various operations. The processor 322 may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 324 may be a storage device such as, for example, a random access memory (RAM), read only memory (ROM), or other electronic, optical, magnetic or any other computer readable medium.

The building system manager 320 may be configured to obtain, store, and provide to the robot 202 information that may be useful to assistance an individual or answer questions possessed by the individual 190 to the robot 202. The information may include directions and maps, as aforementioned. The information may also include schedules of events happening at the building 102 where the robot 202 is located or in the area surrounding the building 102. The information may also include directory information of people or locations within the building 102 and/or in the area surrounding the building 102. The building system manager 320 may also perform climate control within the building 102 and/or building access control for the building 102.

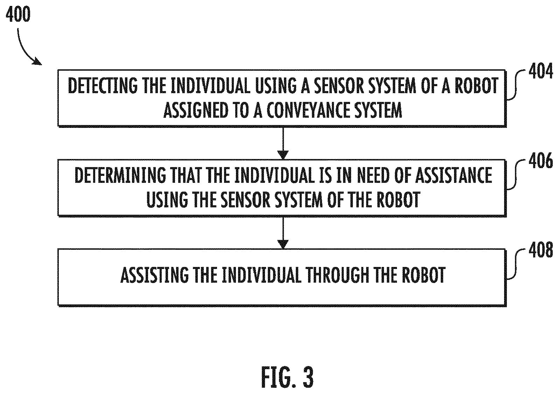

Referring now to FIG. 3, while referencing components of FIGs. 1 and 2. FIG. 3 shows a flow chart of method 400 of assisting an individual 190 using a robot concierge system 200 of FIG. 2, in accordance with an embodiment of the disclosure. In an embodiment, the method 400 is performed by the robot concierge system 200 of FIG. 2.

At block 404, an individual 190 is detected using a sensor system 270 of a robot 202 assigned to a conveyance system. The robot 202 may be assigned to the conveyance system to assist individuals 190 that may use the conveyance system or who or are walking past the conveyance system. In an embodiment, the conveyance system may be an elevator system 101 with an elevator car 103.

At block 406, it is determined that the individual 190 is in need of assistance using a sensor system 270 of the robot 202. At block 408, the individual 190 is assisted through the robot 202. It may be determined that the individual 190 is in need of assistance in block 406 by determining that the individual 190 is in need of information using the sensor system 270 and then the information may be provided to the individual 190 through the robot 202 in block 408. The robot 202 may receive the information from a building system manager 320. The building system manager 320 may automatically push or transmit this information to the robot 202. Alternatively, the robot 202 may request the information from the building system manager 320 periodically to anticipate the information that may be desired from individuals 190 or the robot 202 may request this information in real-time from the building system manager 320 when it is determined that the individual is in need of the information. The information may pertain to at least one of directions, a directory, and a schedule.

It may be determined that the individual 190 is in need of assistance in block 406 by receiving a question from the individual 190 requesting information and then the information may be provided to the individual 190 through the robot 202 in block 408. The question may be received from the individual using a microphone 274 of the sensor system 270. Alternatively, the question may be received from the individual using a camera 272 of the sensor system 270, when the individual is performing sign language. The robot 202 may provide the information to the individual 190 audibly using a speaker 292 of the robot 202. The robot 202 may provide the information to the individual 190 visually using a display device 240 of the robot 202. The robot 202 may provide the information to the individual 190 visually using an arm 220 of the robot 202.

It may be determined that the individual 190 is in need of assistance in block 406 by determining that the individual 190 is in need of directions and then the robot 202 may provide directions to the individual 190 in block 408. The individual 190 may be determined to be in need of directions using the sensor system 270 of the robot 202. For example, the robot 202 may determine that individual 190 visually appears in need of directions or lost using the camera 272, the robot 202 hears the individual 190 state that they are in need of directions or lost using the microphone 274, or the robot 202 may visually see with the camera 272 the individual 190 using sign language indicating that they are in need of directions or lost. The robot 202 may provide directions to individual 190 audibly using a speaker 292 of the robot 202. The robot 202 may provide directions to individual 190 visually using a display device 240 of the robot 202. The robot 202 may provide directions to individual 190 visually using an arm 220 of the robot 202.

It may be determined that the individual 190 is in need of assistance in block 406 by determining that the individual 190 would like to use the conveyance system and then the robot 202 may control operation of the conveyance system for the individual 190 in block 408. In an embodiment, the conveyance system may be an elevator system 101 with an elevator car 103. The robot 202 may control operation of the elevator system 101 by calling (i.e., transmitting an elevator call 380), using the robot 202, an elevator car 103 for the individual 190. The elevator call 380 may be placed by the robot 202 manually pressing the elevator call device 89. The robot 202 may control operation of the elevator system 101 by holding, using the robot 202, a door 104 of the elevator system 101 open for the individual 190 to enter the elevator car 103. The robot 202 may control operation of the elevator system 101 by extending an arm 220 of the robot 202 to hold a door 104 of the elevator system 101 open for the individual 190 to enter the elevator car 103. In an embodiment, the robot 202 holds the door 104 open by the arm 220 interacting with a door reversal sensor of the elevator system 101. In another embodiment, the robot 202 holds the door 104 open by the arm 220 pressing a door open button of the elevator system 101. In another embodiment, the robot 202 may communicate directly with the elevator system 101 through at least one of short-range wireless protocols and long-range wireless protocols. In another embodiment, the robot 202 may communicate directly with the dispatcher 350 of the elevator system 101 through at least one of short-range wireless protocols and long-range wireless protocols. In another embodiment, the robot 202 may communicate directly with the controller 115 of the elevator system 101 through at least one of short-range wireless protocols and long-range wireless protocols.

While the above description has described the flow process of FIG. 3 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method (400) of assisting an individual (190) using a robot concierge system (200), the method (400) comprising:
determining (404) that the individual (190) is in need of assistance using a sensor system (270) of a robot (202) assigned to the conveyance system (200); and
assisting (408) the individual (190) through the robot (202).

2. The method (400) of claim 1, further comprising:
determining that the individual (190) is in need of information using the sensor system (270); and
providing the information to the individual (190) through the robot (202);
optionally wherein the information pertains to at least one of directions, a directory, and a schedule.

3. The method (400) of claim 2, further comprising:
transmitting the information from a building system manager (320); and
receiving the information at the robot (202).

4. The method (400) of any one of claim 2 or claim 3, further comprising:
requesting, using the robot (202), the information from a building system manager (320);
transmitting the information from the building system manager (320); and
receiving the information at the robot (202).

5. The method (400) of any preceding claim, further comprising:
receiving a question from the individual (190) requesting information, optionally requesting information using a microphone of the sensor system (270) or a camera (272) of the sensor system (270); and
providing the information to the individual (190) through the robot (202).

6. The method (400) of claim 5, where the question is conveyed by the individual (190) using sign language that is captured by the camera (272).

7. The method (400) of any preceding claim, further comprising:
receiving a question from the individual (190) requesting information; and
providing the information to the individual (190) by at least one of:
audibly using a speaker (292) of the robot (202),
visually using a display device (240) of the robot (202), and
visually using an arm (22) of the robot (202).

8. The method (400) of any preceding claim, further comprising:
determining that the individual (190) is in need of directions; and
providing directions to the individual (190); and optionally providing directions to the individual (190) by at least one of:
audibly using a speaker (292) of the robot (202),
visually using a display device (240) of the robot (202), and
visually using an arm (220) of the robot (202).

9. The method (400) of any preceding claim, further comprising:
determining that the individual (190) is in need of directions to a destination; and
instructing the robot (202) to lead the individual to the destination.

10. The method (400) of any preceding claim, further comprising:
determining that the individual (190) would like to use the conveyance system; and
controlling, using the robot (202), operation of the conveyance system for the individual (190).

11. The method (400) of any preceding claim, further comprising:
determining that the individual (190) would like to use the conveyance system, the conveyance system being an elevator system (101) comprising an elevator car (103); and
calling, using the robot (202), the elevator car (103) for the individual (190).

12. The method (400) of any preceding claim, further comprising:
determining that the individual (190) would like to use the conveyance system, the conveyance system being an elevator system (101) comprising an elevator car (103); and
holding, using the robot (202), a door of the elevator system (101) open for the individual (190) to enter the elevator car (103) by using an arm (220) of the robot (202) or by communicating with at least one of a dispatcher of the elevator system (101) and a controller (115) of the elevator system (101); and/or
holding, using the robot (202), a door of the elevator system (101) open for the individual (190) to enter the elevator car (103) by extending an arm (220) of the robot (202) to hold a door of the elevator system (101) open for the individual to enter the elevator car (103),
wherein the arm (220) interacts with a door reversal sensor of the elevator system (101) or and the arm (220) presses a door open button of the elevator system (101).

13. The method (400) of any preceding claim, further comprising:
asking if the individual (190) is in need of information using a microphone of the sensor system (270), a display device (240) of the sensor system (270), or sign language; and/or
asking if the individual (190) would like to use the conveyance system using a microphone of the sensor system (270), a display device (240) of the sensor system (270), or sign language.

14. The method (400) of any preceding claim, further comprising:
detecting the individual (190) using a sensor system (270) of a robot (202) assigned to a conveyance system.

15. A computer program product embodied on a non-transitory computer readable medium, the computer program product including instructions that, when executed by a processor, cause the processor to perform operations comprising:
determining that the individual (190) is in need of assistance using a sensor system (270) of a robot (202) assigned to a conveyance system; and
assisting the individual (190) through the robot (202).
